# FASCICULE DE BREVET EUROPEEN

(11) **EP 1 876 465 B1**
(45) Date de publication et mention de la délivrance du brevet: **09.10.2013**
(21) Numéro de dépôt: 07111525.7
(22) Date de dépôt: 02.07.2007
(51) Int. Cl.: G01S 19/08

(54) **Procédé de détermination d'informations de navigation communes pour des régions disposant de groupes différents de stations de surveillance de satellites de système de navigation par satellites**
Verfahren zur Ermittlung von gemeinschaftlichen Navigationsinformationen für Regionen, die über verschiedene Gruppen von Überwachungsstationen von Satelliten eines Satellitennavigationssystems verfügen
Method of determining common navigation information for regions with different groups of satellite surveillance stations in a satellite navigation system

(30) Priorité: 03.07.2006 FR 0652775
(43) Date de publication de la demande: 09.01.2008
(73) Titulaire: Alcatel Lucent, 75007 Paris (FR)
(72) Inventeur: Levy, Jean Christophe, 31130 Balma (FR); Damidaux, Jean-Louis, 31650 Auzielle (FR)
(74) Mandataire: Sciaux, Edmond

(56) Documents cités:
- US-A1- 2004 088 111
- BLOMENHOFER, B. ET AL: "GNSS/Galileo Global and Regional Integrity Performance Analysis" PROCEEDINGS OF ION GNSS-2004, 21 septembre 2004 (2004-09-21), pages 2158-2168, XP002415356 Long Beach, CA, USA
- ENGE, P. ET AL: "Architecture for a Civil Integrity Network Using Inmarsat" PROCEEDINGS OF ION GPS-90, septembre 1990 (1990-09), pages 287-296, XP002415357 USA

## Description

L'invention concerne les systèmes de navigation par satellites (de type RNSS (pour « Radio Navigation Satellite System ») ou GNSS (pour « Global Navigation Satellite System »)), et plus précisément la détermination d'informations de navigation relatives à des satellites de navigation de tels systèmes.

On entend ici par « système de navigation par satellites » tout système dédié à la navigation et comportant une constellation de satellites (de navigation) placés en orbite autour d'un astre (par exemple la Terre) et chargés de diffuser à destination de récepteurs de navigation des messages de navigation destinés à leur permettre de déterminer leur position. Il pourra s'agir, par exemple, de l'un des systèmes existants (GPS, GLONASS) ou de l'un des futurs systèmes (GALILEO, COMPASS), ou encore de l'un de leurs équivalents ou dérivés, comme par exemple MRS/ERIS.

On entend ici par « message de navigation » un message comportant des informations de navigation relatives à la position orbitale et/ou la synchronisation (décalage d'horloge interne par rapport à l'horloge de référence du système) d'un satellite de navigation.

Il est rappelé que les systèmes de navigation par satellites précités peuvent coopérer avec un ou plusieurs systèmes (ou segments) de surveillance d'intégrité, comportant un ou plusieurs groupes (éventuellement régionaux) de stations de surveillance de satellites (terrestres ou spatiales) associés respectivement à des centres de calcul, et chargés de diffuser également à destination des récepteurs de navigation des messages d'intégrité. Ces derniers comportent généralement des informations d'intégrité représentatives des valeurs de fiabilité des corrections d'erreur de positionnement orbital et/ou de synchronisation des satellites qui sont utilisées pour produire certaines informations de navigation contenues dans un message de navigation ou des corrections d'un tel message de navigation.

Ces systèmes (ou segments) de surveillance d'intégrité peuvent être de tout type dès lors qu'ils sont capables de déterminer des informations d'intégrité (indicateur de qualité de la surveillance d'intégrité (ou IQSI)) relatives à des informations de navigation relatives aux satellites de navigation d'au moins un système de navigation par satellites. Il pourra par exemple s'agir du système EGNOS (coopérant actuellement avec les systèmes GPS et GLONASS et offrant une diffusion de messages d'intégrité de type géostationnaire (ou GEO)), du futur système GMS (pour « Galileo Mission Segment » - destiné à coopérer avec au moins le système GALILEO et à offrir une diffusion de messages d'intégrité en orbite moyenne (ou MEO)), ou encore du futur système ERIS/MRS (pour « External Regional Integrity Segment /Multiconstellation Regional System »- destiné à coopérer avec au moins les systèmes GPS, GLONASS et GALILEO et à offrir une diffusion de messages d'intégrité de type MEO dans le cas des deux premiers et de type GEO dans le cas du dernier). Par exemple, dans le cas du système de surveillance d'intégrité (de type SBAS) EGNOS l'IQSI est appelé UDRE (pour « User Differential Range Error »), et dans le cas du système de surveillance d'intégrité GMS l'IQSI est appelé SISMA (pour « Signal In Space Monitoring Accuracy »).

Comme le sait l'homme de l'art, la qualité de la surveillance de l'intégrité des usagers des récepteurs de navigation a une incidence sur la confiance qu'un usager peut avoir dans la position que son récepteur (de navigation) a déterminée. Cette qualité de surveillance dépend essentiellement des conditions de surveillance de l'intégrité, c'est-à-dire de la combinaison du nombre de stations de surveillance actives et donc capables de surveiller chaque satellite, des erreurs de mesures de pseudo-distances effectuées par ces stations de surveillance et de la distribution géométrique (positions) des stations de surveillance vis-à-vis du satellite. Une panne d'au moins une station de surveillance ou un problème de transmission va donc dégrader les performances de surveillance de l'intégrité.

Jusqu'à présent, ce type de dégradation pénalisait tous les usagers dont les récepteurs recevaient des messages d'intégrité à performance dégradée. Or, il est envisagé de décomposer certains systèmes de surveillance d'intégrité en zones ou régions comportant chacune son propre groupe de stations de surveillance et son propre centre de calcul d'informations de navigation (correction d'erreur) et d'informations d'intégrité. En cas de dégradation des performances dans une région ou bien lorsqu'une région dispose d'un segment de surveillance d'intégrité moins performant, seuls sont pénalisés les usagers recevant des messages d'intégrité de cette région.

Un problème similaire peut également se produire lorsque plusieurs systèmes de surveillance d'intégrité indépendants seront en mesure de déterminer des messages d'intégrité relatifs à une même constellation de satellites de navigation. Dans ce cas, les usagers qui reçoivent des messages d'intégrité du système de surveillance d'intégrité le plus performant seront avantagés par rapport aux autres.

Par ailleurs, en présence de plusieurs régions, chaque région doit déterminer pour chaque satellite d'une constellation un couple, comportant une information de navigation et une information d'intégrité, et diffuser tous ces couples vers les récepteurs de navigation, à des instants choisis. Ce mode de diffusion région par région entraîne une importante consommation de bande passante, ce qui n'est pas favorable compte tenu de sa limitation et de son coût. Un inconvénient similaire survient lorsque plusieurs systèmes de surveillance d'intégrité indépendants doivent diffuser en parallèle des couples d'informations de navigation et d'intégrité de même type.

US 2004/088111 définit un centre de traitement d'informations de navigation d'un système de navigation par satellites, qui reçoit des informations de navigation et des informations d'intégrité associées de plusieurs centres de calcul régionaux et qui recalcule des informations de navigation et des informations d'intégrité à partir des informations reçues en minimisant les valeurs des informations d'intégrité pour toutes les régions et transmet les nouvelles informations de navigation et d'intégrité aux différentes régions.

L'invention a donc pour but d'améliorer la situation en permettant la sélection pour chaque satellite (d'une constellation de satellites de navigation) des informations de navigation qui sont les meilleures à un instant donné.

Elle propose à cet effet un procédé dédié à la détermination d'informations de navigation pour au moins un système de navigation par satellites (comprenant une constellation de satellites de navigation), des groupes de stations de surveillance de satellites associés à des régions distinctes, et des centres de calcul associés chacun à l'un des groupes.

Ce procédé se caractérise par le fait qu'il consiste :
- à déterminer à des instants choisis (par exemple périodiquement), dans chaque centre de calcul et pour chacun des satellites, une information de navigation et au moins une information d'intégrité associée, à partir de données fournies par le groupe associé, afin de constituer un ensemble primaire de couples d'information de navigation et d'information d'intégrité correspondant respectivement aux satellites,
- à constituer, à partir des ensembles primaires des différents centres de calcul, un sur-ensemble primaire comportant des ensembles secondaires comprenant chacun les informations de navigation de l'un des ensembles primaires,
- à déterminer dans chaque centre de calcul, pour chaque information de navigation de chaque ensemble secondaire du sur-ensemble primaire, l'information d'intégrité correspondante, afin de constituer un sur-ensemble secondaire comportant des ensembles tertiaires associés respectivement aux régions et comprenant chacun les informations d'intégrité déterminées, correspondantes,
- à constituer à partir des informations de navigation des ensembles primaires un ensemble quaternaire d'informations de navigation associées à chacun des satellites et minimisant les valeurs des informations d'intégrité des ensembles tertiaires pour toutes les régions, puis à transmettre cet ensemble quaternaire aux différentes régions.

En d'autres termes, chaque région calcule des paramètres d'intégrité s'appuyant sur les informations de navigation (corrections) fournies par chacune des régions pour chaque satellite, et l'on choisit le jeu d'informations de navigation (corrections) qui permet de minimiser les valeurs des informations d'intégrité pour l'ensemble des régions.

Le procédé selon l'invention peut comporter d'autres caractéristiques qui peuvent être prises séparément ou en combinaison, et notamment :
- l'information d'intégrité minimisée, pour un satellite donné, est par exemple l'information d'intégrité qui présente la plus petite valeur ;
- les informations de navigation sont par exemple des corrections d'erreur de positionnement orbital et/ou de synchronisation des satellites ;
- l'information d'intégrité peut par exemple être un indicateur de qualité de la surveillance d'intégrité (ou lQSl) appelé « UDRE » ;
- on peut prévoir un centre de traitement i) pour recevoir les ensembles primaires déterminés par les différents centres de calcul, ii) pour constituer le sur-ensemble primaire à partir des ensembles primaires, iii) pour transmettre aux centres de calcul le sur-ensemble primaire, iv) pour recevoir les sur-ensembles secondaires déterminés par les différents centres de calcul, v) pour constituer l'ensemble quaternaire, et vi) pour transmettre l'ensemble quaternaire aux régions.

L'invention est particulièrement bien adaptée, bien que de façon non exclusive, aux services d'intégrité de systèmes de navigation par satellites comme par exemple GALILEO, GPS, GLONASS et COMPASS, ainsi que leurs variantes et leurs équivalents.

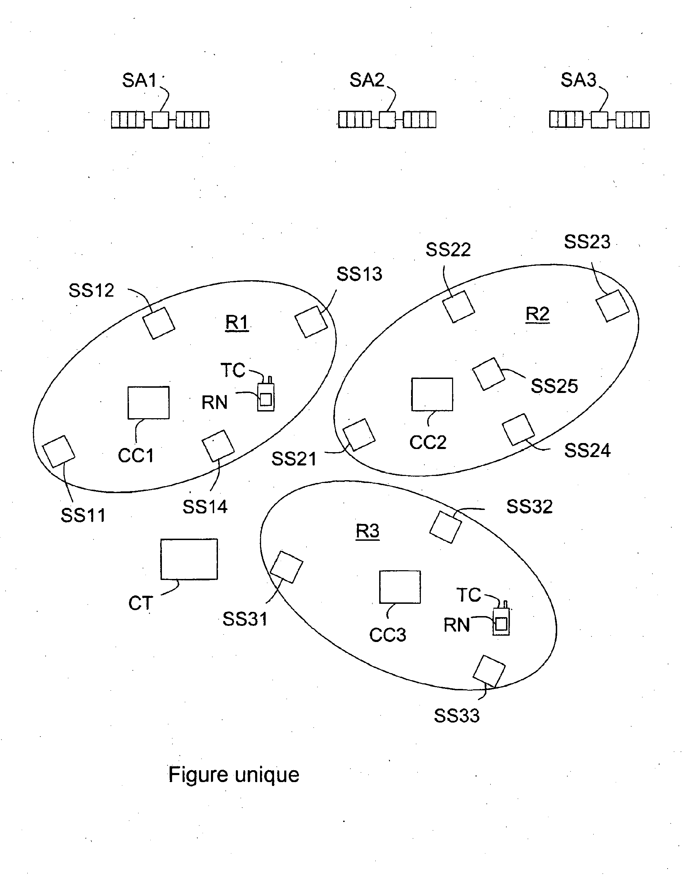

D'autres caractéristiques et avantages de l'invention apparaîtront à l'examen de la description détaillée ci-après, et du dessin annexé, sur lequel l'unique figure illustre de façon très schématique et fonctionnelle une partie d'un système de navigation par satellites, comprenant une constellation de satellites et un centre de traitement, et un système de surveillance d'intégrité décomposé en trois régions indépendantes.

Le dessin annexé pourra non seulement servir à compléter l'invention, mais aussi contribuer à sa définition, le cas échéant.

L'invention a pour objet de permettre la sélection pour chaque satellite d'une constellation de satellites d'un système de navigation par satellites des informations de navigation qui sont les meilleures à un instant donné pour l'ensemble des régions.

Dans ce qui suit, on considère à titre d'exemple non limitatif le cas d'un système de navigation par satellites comportant une constellation de satellites et combiné à un unique système (ou segment) de surveillance d'intégrité (sol ou satellitaire). Mais, l'invention n'est pas limitée à une combinaison avec un unique système de surveillance d'intégrité. Les satellites de la constellation peuvent en effet faire l'objet d'une surveillance d'intégrité au moyen de plusieurs systèmes de surveillance d'intégrité indépendants. Par exemple, le système de surveillance d'intégrité est le futur système ERIS/MRS (« External Regional Integrity Segment / Multiconstellation Regional System »), dans lequel les messages d'intégrité sont diffusés par satellite(s) en orbite moyenne (ou MEO) dans le cas d'un système GALILEO.

Par ailleurs, on considère que le système de navigation par satellites est le futur système GALILEO. Mais, l'invention n'est pas limitée à ce système. Elle concerne en effet tous les systèmes de navigation par satellites objets d'une surveillance de l'intégrité (ou vérification de cohérence) et notamment les systèmes existants de type GPS (en particulier GPS III) ou GLONASS, et le futur système COMPASS, ainsi que tous leurs équivalents et dérivés, comme par exemple MRS/ERIS.

Un système de navigation par satellites, comme par exemple celui qui est partiellement illustré sur l'unique figure, comprend au moins une constellation de satellites SAi (ici i = 1 à 3, mais dans la réalité sa valeur maximale est beaucoup plus grande, typiquement 36 dans le cas du système GALILEO).

Schématiquement, les satellites SAi sont placés en orbite autour de la Terre et sont chargés, notamment, d'émettre des signaux permettant de faire des mesures de pseudo-distances et de diffuser en direction de la Terre des messages de navigation qui leurs sont transmis par le segment sol de mission, afin que les informations qu'ils contiennent soient exploitées par des récepteurs de navigation RN, éventuellement implantés dans des terminaux de communication TC (comme illustré), et par les stations de surveillance de satellites SSkj du système de surveillance d'intégrité.

On notera qu'un récepteur (de navigation) RN peut constituer lui-même un équipement de communication. Par ailleurs, un récepteur (de navigation) RN peut être implanté dans tout type de terminal (ou équipement) de communication TC, et notamment dans un téléphone mobile (ou cellulaire), un ordinateur portable ou embarqué, ou un assistant personnel numérique (ou PDA).

Les stations (de surveillance de satellites) SSkj sont situées en des endroits choisis de la Terre (comme illustré) ou dans des engins spatiaux, comme par exemple des satellites. Le système de surveillance d'intégrité est décomposé en régions Rk comportant chacune au moins une station SSkj associée à un centre de calcul CCk. Dans l'exemple non limitatif illustré sur l'unique figure, trois régions R1 à R3 (k = 1 à 3) ont été schématiquement matérialisées par des ellipses. Mais, le nombre de régions peut prendre n'importe quelle valeur supérieure ou égale à deux (2). Par ailleurs, les formes des régions Rk ne sont pas obligatoirement identiques et le nombre de stations SSkj peut varier d'une région Rk à une autre Rk' (k'≠k). Par exemple, sur l'unique figure la région R1 comprend quatre stations SS11 à SS14, la région R2 comprend cinq stations SS21 à SS25 et la région R3 comprend trois stations SS31 à SS33.

Dans la réalité le nombre total de stations de surveillance SSkj est typiquement de 40 à 100 dans le cas du système GALILEO.

Les stations SSkj sont notamment chargées, d'une part, de collecter les messages de navigation qui sont diffusés par les satellites SAi de la constellation, et d'autre part, d'effectuer périodiquement des mesures des pseudo-distances qui les séparent des satellites SAi en vue. Chaque mesure de pseudo-distance et le message de navigation correspondant ainsi que son instant de réception sont communiqués par chaque station de surveillance SSkj au centre de calcul CCk de sa région Rk.

Chaque centre de calcul CCk est généralement implanté sur la Terre. Il est notamment chargé de contrôler la cohérence entre les mesures de pseudo-distance reçues et les informations contenues dans les messages de navigation diffusés par les satellites SAi, qui lui sont communiqués par les stations de surveillance SSkj de sa région Rk. Chaque centre de calcul CCkj est également chargé de déterminer pour chaque satellite SAi de la constellation un couple C1ki comportant au moins une information de navigation et une information d'intégrité associée.

L'information de navigation contenue dans un couple C1ki est par exemple une correction d'erreur de positionnement orbital et/ou de synchronisation d'un satellite SAi, laquelle est utilisée pour produire certaines informations de navigation contenues dans un message de navigation.

L'information d'intégrité contenue dans un couple C1 ki est par exemple une valeur de fiabilité d'information de navigation contenue dans un message de navigation ou de correction d'un tel message de navigation. Cette valeur de fiabilité est un indicateur de qualité de la surveillance d'intégrité (ou lQSl) propre à un satellite. Les informations d'intégrité dépendent du système de surveillance d'intégrité concerné. Par exemple, dans le cas du système de surveillance d'intégrité (de type SBAS) EGNOS l'IQSI est appelé UDRE (pour « User Differential Range Error »), et dans le cas du système de surveillance d'intégrité GMS I'IQSI est appelé SISA/SISMA (pour « Signal In Space Accuracy / Signal In Space Monitoring Accuracy »).

Un centre de calcul CCkj peut également être chargé de prédire les trajectoires et décalages d'horloge des satellites SAi à partir des mesures de pseudo-distance effectuées par les stations (de surveillance) SSkj. Ces prédictions de trajectoires et de décalages d'horloge servent à générer les futurs messages de navigation qui sont transmis aux satellites SAi afin qu'ils les diffusent.

L'invention propose un procédé de détermination d'informations de navigation communes pour différentes régions couvertes par le système de navigation par satellites. Ce procédé comprend une combinaison de quatre étapes.

Dans une première étape chaque centre de calcul CCk détermine à des instants choisis (par exemple périodiquement), pour chacun des satellites SAi, au moins une information de navigation CEki et au moins une information d'intégrité IIki associée à partir des données qu'il reçoit du groupe Gk de stations SSkj de sa région Rk. Chaque centre de calcul CCk constitue alors un couple C1ki avec chaque information de navigation CEki et l'information d'intégrité IIki associée. Puis, il constitue un ensemble primaire E1k avec les couples C1 ki correspondant respectivement aux différents satellites SAi.

Il est important de noter que dans ce qui suit et ce qui précède les notions de « couple », « d'ensemble » et de « sur-ensemble » ne sont utilisées que pour faciliter la compréhension du mécanisme mis en oeuvre. L'homme de l'art sait en effet qu'il existe de très nombreuses façons de regrouper des données, telles que des informations de navigation et d'intégrité, en particulier lorsque ces données se présentent sous la forme de bits. Ainsi, on peut utiliser des tables ou des tableaux ou encore des multiplets (ou n-uplets). Par conséquent, on comprendra qu'un sur-ensemble constitue ici un regroupement de données appartenant à des regroupements de données (appelés ensembles) d'un niveau inférieur, appartenant elles-mêmes éventuellement à des regroupements de données (appelés couples) d'un niveau encore inférieur.

Lorsque les différents centres de calcul CCk ont constitué leur ensemble primaire E1k, ils le transmettent vers un centre de traitement CT, ce qui met fin à la première étape. Ce centre de traitement CT peut faire partie soit du système de navigation par satellites, soit du système de surveillance d'intégrité. Il peut éventuellement faire partie de l'un des centres de calcul CCk.

Dans la deuxième étape le centre de traitement CT commence par extraire des ensembles primaires E1k reçus les informations de navigation IIki qui sont contenues dans chacun de ses couples C1ki. Puis, il constitue pour chaque région Rk un ensemble secondaire E2k avec les informations de navigation IIki extraites de l'ensemble primaire E1k associé à ladite région Rk. Ensuite, il constitue un sur-ensemble primaire SE1 avec tous les ensembles secondaires E2k qu'il a constitués, puis transmet ce sur-ensemble primaire SE1 à chacun des centres de calcul CCk, ce qui met fin à la deuxième étape.

Dans la troisième étape, chaque centre de calcul CCk' détermine l'information d'intégrité IIkiₖ, qui correspond à chaque information de navigation CEki contenue dans chaque ensemble secondaire E2k du sur-ensemble primaire SE1. k' est également un indice de région, le « ' » ne servant qu'à permettre la différenciation d'indice dans la référence IIki_{k'} (on peut donc avoir k = k'). Puis, chaque centre de calcul CCk' constitue des ensembles tertiaires E3k' associés chacun à l'une des régions Rk' et comprenant chacun les informations d'intégrité llkiₖ, qu'il a déterminées et qui correspondent à cette région k'. Ensuite, chaque centre de calcul CCk' constitue un sur-ensemble secondaire SE2k' comportant les ensembles tertiaires E3k' qu'il a constitués.

Lorsque les différents centres de calcul CCk' ont constitué leur sur-ensemble secondaire SE2k', ils le transmettent au centre de traitement CT, ce qui met fin à la troisième étape.

Dans une quatrième étape, le centre de traitement CT commence par déterminer parmi les ensembles primaires E1k les informations de navigation associées à chacun des satellites SAi et minimisant les valeurs des paramètres d'intégrité IIki_{k'} contenus dans les ensembles tertiaires S3k' de chaque sur-ensemble secondaire SE2k' reçu.

Par exemple, l'information d'intégrité minimisée, pour un satellite donné, est le paramètre d'intégrité IIki_{k'} qui présente la plus petite valeur (par exemple l'UDRE le plus petit), pour ledit satellite donné, parmi toutes celles déterminées par chaque centre de calcul CCk' dans la troisième étape pour chacune des régions Rk'. On connaît ainsi pour chaque satellite SAi la région Rk qui offre la correction permettant de garantir une intégrité sur de petites valeurs.

Ensuite, le centre de traitement CT constitue un ensemble quaternaire E4 qui regroupe les informations de navigation qu'il vient de déterminer (et qui sont associées à chacun des satellites SAi et minimisent les valeurs des paramètres d'intégrité IIki_{k'}). Puis, le centre de traitement CT transmet cet ensemble quaternaire E4 aux différentes régions Rk afin qu'elles le diffusent dans un message d'intégrité.

L'ensemble quaternaire E4 étant le même pour toutes les régions Rk, on utilise donc dans chaque région Rk la même fréquence pour transmettre le message d'intégrité qui le contient, ce qui économise de la bande passante.

Grâce à l'invention, tous les récepteurs RN, destinataires du message d'intégrité, disposent des mêmes informations d'intégrité et de navigation pour chaque satellite SAi, quels que soient les niveaux de surveillance d'intégrité respectifs offerts par les segments de surveillance d'intégrité des régions dans lesquelles ils sont situés. En outre, ces informations d'intégrité et de navigation sont les meilleures dont on puisse disposer à l'instant considéré pour chaque satellite SAi.

La partie dédiée au traitement de données au sein du centre de traitement CT et/ou la partie dédiée aux calculs des informations d'intégrité et de navigation au sein de chaque centre de calcul CCk peu(ven)t être réalisée(s) sous la forme de circuits électroniques, de modules logiciels (ou informatiques), ou d'une combinaison de circuits et de logiciels.

L'invention ne se limite pas aux modes de réalisation de procédé de détermination d'informations de navigation et d'intégrité associées décrits ci-avant, seulement à titre d'exemple, mais elle englobe toutes les variantes que pourra envisager l'homme de l'art dans le cadre des revendications ci-après.

Ainsi, dans ce qui précède on a décrit un exemple dans lequel les stations de surveillance appartenaient à un même système de surveillance d'intégrité. Mais, cela n'est pas obligatoire. Elles peuvent en effet appartenir à plusieurs (au moins deux) systèmes de surveillance d'intégrité différents.

## Revendications

1. Procédé de détermination d'informations de navigation pour au moins un système de navigation par satellites comprenant une constellation de satellites de navigation (SAi), des groupes (Gk) de stations de surveillance de satellites (SSkj) associés à des régions (Rk) distinctes, et des centres de calcul (CCk) associés chacun à l'un desdits groupes (Gk), **caractérisé en ce qu'**il consiste :
- à déterminer à des instants choisis, dans chaque centre de calcul (CCk) et pour chacun desdits satellites (SAi), une information de navigation (CEki) et au moins une information d'intégrité associée, à partir de données fournies par le groupe (Gk) associé, de manière à constituer un ensemble primaire (E1k) de couples (C1ki) d'information de navigation et d'information d'intégrité correspondant respectivement auxdits satellites (SAi),
- à constituer, à partir des ensembles primaires (E1k) des différents centres de calcul (CCk), un sur-ensemble primaire (SE1) comportant des ensembles secondaires (E2k) comprenant chacun les informations de navigation (CEki) de l'un desdits ensembles primaires (E1k),
- à déterminer dans chaque centre de calcul (CCk'), pour chaque information de navigation (CEki) de chaque ensemble secondaire (E2k) dudit sur-ensemble primaire (SE1), l'information d'intégrité (IIki_{k'}) correspondante, afin de constituer un sur-ensemble secondaire (SE2k') comportant des ensembles tertiaires (S3k') associés respectivement auxdites régions (Rk') et comprenant chacun lesdites informations d'intégrité (IIki_{k'}) déterminées, correspondantes,
- à constituer à partir des informations de navigation desdits ensembles primaires (E1k) un ensemble quaternaire (E4) d'informations de navigation associées à chacun des satellites (SAi) et minimisant les valeurs des informations d'intégrité (IIki_{k'}) desdits ensembles tertiaires (S3k') pour toutes les régions (Rk), puis à transmettre cet ensemble quaternaire (E4) aux différentes régions (Rk).

2. Procédé selon la revendication 1, **caractérisé en ce que** l'information d'intégrité (IIk'i) minimisée, pour un satellite (SAi) donné, est une information d'intégrité qui présente la valeur la plus petite.

3. Procédé selon l'une des revendications 1 et 2, **caractérisé en ce que** lesdites informations de navigation sont des corrections d'erreur de positionnement orbital et/ou de synchronisation des satellites (SAi).

4. Procédé selon l'une des revendications 1 à 3, **caractérisé en ce que** l'information d'intégrité (Ilki) est un indicateur de qualité de la surveillance d'intégrité appelé « UDRE ».

5. Procédé selon l'une des revendications 1 à 4, **caractérisé en ce que** l'on procède périodiquement dans chaque centre de calcul (CCk) à la détermination pour chacun desdits satellites (SAi) d'une information de navigation (CEki) et d'au moins une information d'intégrité associée.

6. Procédé selon l'une des revendications 1 à 5, **caractérisé en ce que** l'on prévoit un centre de traitement (CT) i) pour recevoir lesdits ensembles primaires (E1k) déterminés par les différents centres de calcul (CCk), ii) pour constituer ledit sur-ensemble primaire (SE1) à partir desdits ensembles primaires (E1k), iii) pour transmettre auxdits centres de calcul (CCk) ledit sur-ensemble primaire (SE1), iv) pour recevoir lesdits sur-ensembles secondaires (SE2k) déterminés par les différents centres de calcul (CCk), v) pour constituer ledit ensemble quaternaire (E4), et vi) pour transmettre ledit ensemble quaternaire (E4) auxdites régions (Rk).

7. Utilisation du procédé de détermination d'informations de navigation et d'intégrité selon l'une des revendications précédentes, pour les services d'intégrité de systèmes de navigation par satellites choisis dans un groupe comprenant au moins GALILEO, GPS, GLONASS et COMPASS, ainsi que leurs variantes et leurs équivalents.

## Patentansprüche

1. Verfahren zur Ermittlung von Navigationsinformationen für mindestens ein Satellitennavigationssystem, welches eine Konstellation von Navigationssatelliten (SAi), mit unterschiedlichen Regionen (Rk) assoziierte Gruppen (Gk) von Satellitenüberwachungsstationen (SSkj) und mit einer jeden der besagten Gruppen (Gk) assoziierte Rechenzentralen (CCk) umfasst, **dadurch gekennzeichnet, dass** es darin besteht:
- zu ausgewählten Zeitpunkten in jeder Rechenzentrale (CCk) und für einen jeden der besagten Satelliten (SAi) eine Navigationsinformation (CEki) und mindestens eine assoziierte Integritätsinformation ausgehend von von der assoziierten Gruppe (Gk) bereitgestellten Daten zu ermitteln, um einen Primärsatz (E1k) von Navigationsinformations- und Integritätsinformations-Paaren (C1 ki), welche jeweils den besagten Satelliten (SAi) entsprechen, zu bilden,
- ausgehend von den Primärsätzen (E1k) der verschiedenen Rechenzentralen (CCk) einen primären Obersatz (SE1) mit Sekundärsätzen (E2k), welche jeweils Navigationsinformationen (CEki) eines der besagten Primärsätze (E1k) umfassen, zu bilden,
- in jeder Rechenzentrale (CCk') für jede Navigationsinformation (CEki) eines jeden Sekundärsatzes (E2k) des besagten primären Obersatzes (SE1) die entsprechende Integritätsinformation (IIkiₖ) zu ermitteln, um einen sekundären Obersatz (SE2k') mit Tertiärsätzen (S3k'), welche jeweils mit den besagten Regionen (Rk') assoziiert sind und jeweils die besagten entsprechenden ermittelten Integritätsinformationen (Ilkiₖ) umfassen, zu bilden,
- ausgehend von Navigationsinformationen der besagten Primärsätze (E1k) einen Quartärsatz (E4) von mit einem jeden der Satelliten (SAi) assoziierten Navigationsinformationen bei Minimieren der Werte der Integritätsinformationen (Ilkiₖ) der besagten Tertiärsätze (S3k') für alle Regionen (Rk) zu bilden, und anschließend diesen Quartärsatz (E4) an die verschiedenen Regionen (Rk) zu übertragen.

2. Verfahren nach Anspruch 1, **dadurch gekennzeichnet, dass** die minimierte Integritätsinformation (Ilk'i) für einen gegebenen Satelliten (SAi) eine Integritätsinformation ist, welche den kleinsten Wert aufweist.

3. Verfahren nach einem der Ansprüche 1 und 2, **dadurch gekennzeichnet, dass** die besagten Navigationsinformationen Korrekturen der Orbitalpostions- und/oder Synchronisationsfehler der Satelliten (SAi) sind.

4. Verfahren nach einem der Ansprüche 1 bis 3, **dadurch gekennzeichnet, dass** die Integritätsinformation (Ilki) ein Qualitätsindikator der Integritätsüberwachung, "UDRE" genannt, ist.

5. Verfahren nach einem der Ansprüche 1 bis 4, **dadurch gekennzeichnet, dass** man in jeder Rechenzentrale (CCk) für einen jeden der besagten Satelliten (SAi) periodisch eine Navigationsinformation (CEki) und mindestens eine assoziierte Integritätsinformation ermittelt.

6. Verfahren nach einem der Ansprüche 1 bis 5, **dadurch gekennzeichnet, dass** man eine Verarbeitungszentrale (CT) vorsieht, um i) die besagten von den verschiedenen Rechenzentralen (CCk) ermittelten Primärsätze (E1k) zu empfangen, ii) ausgehend von den besagten Primärsätzen (E1k) den besagten primären Obersatz (SE1) zu bilden, iii) den besagten primären Obersatz (SE1) an die besagten Rechenzentralen (CCk) zu übertragen, iv) die besagten von den verschiedenen Rechenzentralen (CCk) ermittelten sekundären Obersätze (SE2k) zu empfangen, v) den besagten Quartärsatz (E4) zu bilden, und vi) den besagten Quartärsatz (E4) an die besagten Regionen (Rk) zu übertragen.

7. Anwendung des Verfahrens zur Ermittlung von Navigations- und Integritätsinformationen gemäß einem der vorstehenden Ansprüche für die Integritätsdienste von in einer Gruppe zumindest bestehend aus GALILEO, GPS, GLONASS und COMPASS sowie deren Varianten und äquivalenten ausgewählten Satellitennavigationssystemen.

## Claims

1. Method for determining navigation information for at least one satellite navigation system comprising a constellation of navigation satellites (SAi), groups (Gk) of satellite surveillance stations (SSkj) associated with different regions (Rk), and computer centers (CCk), each associated with one of said groups (Gk), **characterized in that** it involves:
- determining, at selected moments, in each computer center (CCk) and for each of said satellites (SAi), navigation information (CEki) and at least one associated integrity information item, from data provided by the associated group (Gk), so as to constitute a primary set (E1k) of navigation information and integrity information pairs (C1ki), respectively corresponding to said satellites (SAi),
- constituting, from the primary sets (E1k) of the various computer centers (CCk), a primary superset (SE1) comprising secondary sets (E2k), each comprising the navigation information (CEki) of one of said primary sets (E1k),
- determining in each computer center (CCk'), for each navigation information item (CEki) of each secondary set (E2k) of said primary superset (SE1), the corresponding integrity information (IIkiₖ), in order to constitute a secondary superset (SE2k') comprising tertiary sets (S3k'), respectively associated with said regions (Rk'), and each comprising said integrity information (IIkiₖ), determined and corresponding,
- constituting, from the navigation information of said primary sets (E1k), a quaternary set (E4) of navigation information associated with each of the satellites (SAi) and minimizing the values of the integrity information (Ilkiₖ) of said tertiary sets (S3k') for all regions (Rk), then sending this quaternary set (E4) to the various regions (Rk).

2. Method according to claim 1, **characterized in that** the minimized integrity information (Ilk'i), for a given satellite (SAi), is an integrity information item with the smallest value.

3. Method according to one of claims 1 and 2, **characterized in that** said navigation information items are corrections to errors in the orbital positioning and/or synchronization of the satellites (SAi).

4. Method according to one of claims 1 to 3, **characterized in that** the integrity information (Ilki) is a quality indicator of the integrity surveillance called "UDRE".

5. Method according to one of claims 1 to 4, **characterized in that** each computer center (CCk) periodically proceeds with the determination, for each of said satellites (SAi), of a navigation information item (CEki) and at least one associated integrity information item.

6. Method according to one of claims 1 to 5, **characterized in that** a processing center (CT) is planned i) to receive said primary sets (E1k) determined by the various computer centers (CCk), ii) to constitute said primary superset (SE1) from said primary sets (E1k), iii) to send said primary superset (SE1) to said computer centers (CCk), iv) to receive said secondary supersets (SE2k) determined by the various computer centers (CCk), v) to constitute said quaternary set (E4), and vi) to send said quaternary set (E4) to said regions (Rk).

7. Use of the method for determining navigation and integrity information according to one of the preceding claims, for satellite navigation system integrity services chosen from a group comprising at least GALILEO, GPS, GLONASS and COMPASS, as well as their variants and equivalents.
